Europäisches Patentamt

European Patent Office

Office européen des brevets

(19)

(11) .Publication number: **0 051 480**

**B2**

(12) # NEW EUROPEAN PATENT SPECIFICATION

(45) Date of publication of the new patent specification: **13.07.88**

(51) Int. Cl.⁴: **B 32 B 27/08,** B 65 D 65/00

(21) Application number: **81305200.8**

(22) Date of filing: **30.10.81**

(54) Laminate films for heat-shrink packaging foodstuffs.

(30) Priority: **31.10.80 JP 153450/80**

(43) Date of publication of application:
**12.05.82 Bulletin 82/19**

(45) Publication of the grant of the patent:
**23.01.85 Bulletin 85/04**

(45) Mention of the opposition decision:
**13.07.88 Bulletin 88/28**

(84) Designated Contracting States:
**BE CH DE FR GB IT LI NL SE**

(56) References cited:
**EP-A-0 003 635**
**EP-A-0 032 027**
**CA-A- 982 923**
**CA-A-1 081 598**
**GB-A-1 385 196**
**US-A-3 682 767**
**US-A-4 161 562**
**US-A-4 226 822**
**US-A-4 228 215**

The file contains technical information
submitted after the application was filed and
not included in this specification

(73) Proprietor: **KUREHA KAGAKU KOGYO
KABUSHIKI KAISHA**
**9-11 Horidome-cho 1-chome Nihonbashi Chuo-
ku**
**Tokyo 103 (JP)**

(72) Inventor: **Nishimoto, Yoshiharu**
**1 Eguri-Ohmachi Nishiki-machi**
**Iwaki-shi FUkushima-ken (JP)**
Inventor: **Yamazaki, Kengo**
**154-3 Harada Nishiki-machi**
**Iwaki-shi Fukushima-ken (JP)**

(74) Representative: **Arthur, Bryan Edward**
**Withers & Rogers 4 Dyer's Buildings Holborn**
**London EC1N 2JT (GB)**

EP 0 051 480 B2

Courier Press, Leamington Spa, England.

# 0 051 480

## Description

The present invention relates to heat-shrinkable laminate films having a centre layer of a copolymer of vinylidene chloride (hereinafter referred to as PVDC), and two outermost layers comprising a copolymer of ethylene and vinyl acetate (hereinafter referred to as EVA), and to a process for packing foodstuffs employing such films.

Heat-shrink packaging is industrially most convenient for packing irregularly shaped foodstuffs such as raw meats, cooked meats, cheeses and other fatty foodstuffs. In addition, since a long period of preservation is required for these packed foodstuffs, it is necessary for the packaging material to possess a gas-barrier property. Moreover, since it is necessary to subject the packed foodstuffs to heat-treatment for a certain period of time for sterilization where the foodstuff is cooked meat (for instance for at least 8 minutes at 90°C against *Escherichia coli*), oil resistance and peel-resistance of the parts sealed by heat shrinkage (hereinafter referred to as peel-resistance) are required for the packaging material. More specifically, in packing and sterilizing fatty foodstuffs there are problems of breaking the thinly stretched outermost layer which is softened by fats and heat and of breaking the part of the packing material that has been sealed, or of breaking in this vicinity, due to the heat-shrinking stress generated at the time of thermal sterilization or at the time of packing. Accordingly, there is a demand for a packaging material (film) of excellent oil-resistance and peel-resistance.

Films consisting solely of PVDC, laminate films of EVA/PVDC/EVA as disclosed in Canadian Patent No. 982,923, and cyclindrically formed laminate films of EVA/PVDC/EVA irradiated by radio-active rays as disclosed in Japanese Patent Application Laying Open No, 34565/72 have been proposed as heat-shrinkable films which are gas-barriers. However, a film consisting solely of PVDC can be hygienically undesirable because additives, such as plasticizers and stabilizers, in the film can migrate into the packed foodstuff depending on the foodstuff concerned. Also the gas-barrier property of the film may be reduced owing to the relatively large amount of the additvies required to maintain, for example, the cold-resistant strength of the film, thus affecting the ability of the film to preserve foodstuffs.

Since EVA/PVDC/EVA laminate films have an outermost EVA layer which is high in cold-resistant strength, it is not necessary to add a large amount of additive into the PVDC layer. Accordingly, the problem of the reduction of gas-barrier property has been solved. However, EVA has poor oil-resistance and peel resistance.

In Japanese Patent Application Laying Open No. 34565/72, EVA cross-linked by radioactive rays is used for the purpose of improving oil-resistance, but only as one of the outermost layers for fear of causing decomposition of PVDC in the center layer by the radioactive irradiation. In addition, peel-resistance·is not improved by cross-linking the EVA by radioactive irradiation.

In order to obtain laminate films possessing excellent oil-resistance, it is desirable to use as the two outermost layers a polymer of a alpha-olefin with, for instance, a crystalline melting point of higher than 110°C. However, since alpha-olefin polymers of such crystalline melting point possess poor stretchability, it is impossible to obtain a laminate film with uniform stretch after laminating layers of such polymers to a PVDC layer. In addition, where low density polyethylene with a crystalline melting point of lower than 110°C or an ionomer is used, poor peel-resistance is exhibited.

EP—A—32027 which, though not published before the priority date of the present application, has an earlier priority date, disclose a heat-shrinkable laminate film comprising:

(A) a core layer of a vinylidene chloride copolymer resin;

(B) outer surface layers of a poly-α-olefin selected from the group consisting of α-olefin polymers having crystalline melting points of not lower than 110°C, and mixtures each comprising not less than 20% by weight of one of the α-olefin polymers and not more than 80% by weight of an α-olefin polymer having a crystalline melting point of from 80° to 110°C; and

(C) an intermediate layer of a selected thermoplastic resin interposed between the core layer (A) and at least one of the surface layers (B),

the sum of the thicknesses of the layers (B) being from 1/5th to 1/2 of the total thickness of layers (B) and (C).

In the present invention modifications are made in the selected α-olefin polymers and in the thickness of the intermediate adhesive layer.

Accordingly, the present invention provides a laminate film comprising a centre layer of a copolymer (I) of vinylidene chloride and two outermost layers of α-olefin polymer with a respective adhesive layer between the centre layer and each outermost layer; the film being capable of exhibiting a rate of heat shrinkage at 90°C of more than 15%; both the outermost layers consisting of from 20 to 70% by weight of a copolymer (II) of ethylene and one or more alpha-olefins, the copolymer (II) having a crystalline melting point of 110 to 125°C, and from 80 to 30% by weight of a copolymer (III) of ethylene and vinyl acetate, the copolymer (III) having a crystalline melting point of 85 to 103°C; the content of copolymer (II) in the total amount of copolymers in both the outermost layers being less than 65% by weight; the total thickness of the laminate film being from 20 to 100 micrometres; the thickness of each outermost layer being more then 18% of the total thickness of the laminate film; the thickness of the centre layer being at least 2 micrometres and the thickness of each adhesive layer being from 1 to 3 micrometers.

The invention also provides a process of preparing such a laminate film, which process comprises

2

extruding a layer consisting of vinylidene chloride copolymer (I), and two layers consisting of α-olefin polymer and laminating said layers together with adhesive such that said layer of copolymer (I) is the centre layer of the resulting laminate film and said two layers of α-olefin polymer are the outermost layers, the outermost layers consisting of 20 to 70% by weight of copolymer (II) and 80 to 30% by weight of copolymer (III) and the process being such as to make the thickness of the laminate film from 20 to 100 micrometres, the thickness of each outermost layer more than 18% of the total thickness of the laminate film, the thickness of the centre layer at least 2 micrometres and the thickness of each adhesive layer from 1 to 3 micrometres.

The present invention also provides a process for packaging a foodstuff, which process comprises heat-shrink wrapping a foodstuff in a laminate film of the invention.

It is thus possible to provide heat-shrinkable laminate films for packaging foodstuffs which possess excellent oil-resistance, peel-resistance and gas barriering properties. In the description which follows, reference will be made purely by way of example to the accompanying drawings in which:

Fig. 1 shows a range of compositions for copolymer (III), the ordinate showing the melt index of the copolymer (g/10 min) and the abscissa showing the content (% by weight) of vinyl acetate units in the copolymer, and

Fig. 2 is a schematic view of apparatus for preparing a laminate film of the present invention.

The present invention relates to a heat-shrinkable film which can exhibit excellent oil-resistance and peel-resistance and is uniformly stretchable without giving minute local necking. The heat-shrinkable film comprises a centre layer of PVDC and two outermost layers both of which consist of at least 20% by weight of a copolymer of ethylene and alpha-olefin having a crystalline melting point of 110 to 125°C and, preferably, a density of 0.900 to 0.950 g/ml, and of EVA of a crystalline melting point of 85 to 103°C. The content of the copolymer (II) in the total weight of both the two outermost layers is less than 65%. Such a film is relatively rich in stretchability. The films according to the present invention are superior in oil-resistance and peel-resistance as compared to a laminate film having an alpha-olefin polymer of a crystalline melting point equal to the mean value of the crystalline melting points of the above-mentioned alpha-olefin polymers as the two outermost layers.

In order that EVA of a crystalline melting point of 85 to 103°C can play a role in improving stretchability, it is necessary that such EVA is present in each of the two outermost layers in an amount of at least 30% by weight. Accordingly, the resin of the two outermost layers consisting of a mixture of 20 to 70% by weight of a copolymer (II) of ethylene and alpha-olefin, the copolymer (II) having a crystalline melting point of 110 to 125°C, and 80 to 30% by weight of copolymer (III). In order to carry out heat-shrinking packaging conveniently on an industrial scale, films having a rate of heat-shrinkage of higher than 15% at a temperature of 90°C are desirable. In order to prepare a film capable of a rate of heat-shrinkage of higher than 15% it is necessary to maintain the temperature at stretching as low as possible. For that purpose it is necessary that EVA of a crystalline melting point of 85 to 103°C, which is rich in stretchability at a low temperature, is present in an amount of more than 35% by weight to the total amount of polymers in both the two outermost layers. The amount of copolymer (II) in the total amount of polymers in both the two outermost layers is thus less than 65% by weight.

Copolymers of ethylene and a small amount (1.0 to 30% by weight) of alpha-olefin of less than 18 carbon atoms, for instance, butene-1, pentene-1, 4-methylpentene-1, hexene-1, octene-1, etc. can be used as a copolymer (II).

These copolymers are those referred to as linear low-density polyethylene (L-LDPE) of a density of 0.900 to 0.950 g/ml and of a crystalline melting point of 110 to 125°C for instance ULTZEX® and NEOZEX® (both made by Mitsui Petrochemical Co.) and DOWLEX® (made by Dow Chemical Co.), and are produced by copolymerization using a catalyst consisting mainly of a transition metal. These copolymers are rich in stretchability in spite of their relatively high crystalline melting point and moreover, they are tenacious and rich in anti-stress-cracking property.

The EVA which is mixed with copolymer (II) preferably contains 3 to 12% by weight of vinyl acetate units. Such EVA is fairly compatible with copolymer (II) to be rich in transparency and is oil-resistant, peel-resistant and easily stretchable.

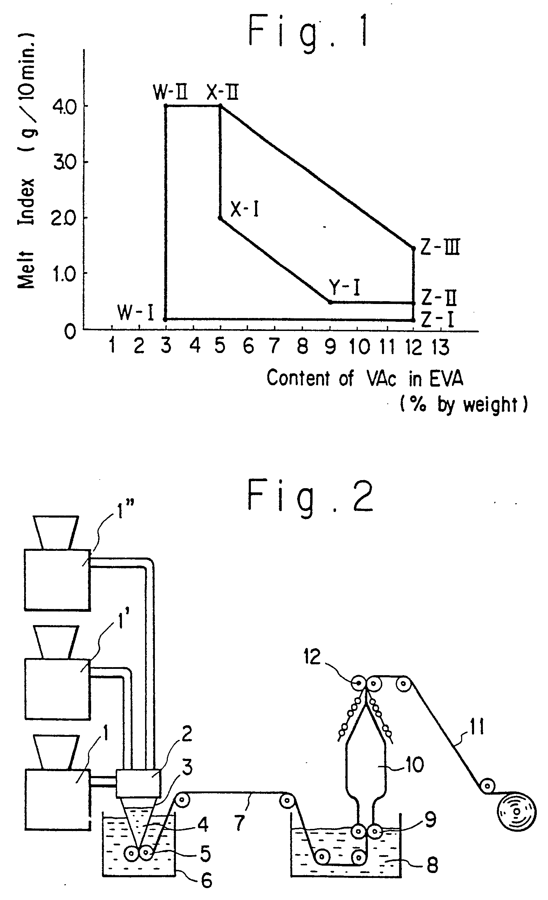

Among such EVA, those included in the pentagon formed by connecting the five points in Figure 1 of the accompanying drawings i.e. W-I (3, 0.2), W-II (3, 4.0), X-II (5, 4.0), Z-III (12, 1.5) and Z-I (12, 0.2) are preferable because of their excellent oil-resistance after mixing with copolymer (II). Moreover, those included in the heptagon defined by the seven points in Figure 1, i.e. W-I (3, 0.2), W-II (3, 4.0), X-II (5, 4.0), X-I (5, 2.0), Y-I (9, 0.5), Z-II (12, 0.2) and Z-I (12, 0.2) are most preferable because of their excellent peel-resistance plus excellent oil-resistance after mixing copolymer (II).

The melt-index of the polymers is measured by the method ASTM D-1238—79 (cf. Japanese Industrial Standard K-6730—1973), and their crystalline melting point is the temperature of the highest peak in the melting curve obtained by determining the melting point of the polymer with a differential scanning calorimeter (Type IB, made by Perkin-Elmer Co.) at a temperature rise rate of 8°C/min.

PVDC for use in the present invention is preferably a copolymer of 65 to 95% by weight of vinylidene chloride and 5 to 35% by weight of at least one unsaturated monomer polymerizable with vinylidene chloride. Vinyl chloride, acrylonitrile and alkyl acrylates with 1 to 18 carbon atoms in the alkyl group can be employed as the comonomer. Plasticizers, stabilizers, etc. may be added if necessary.

Since copolymer (II) is originally not compatible with PVDC, laminates made from a layer of PVDC and layers of copolymer (II) are apt to exfoliate. There are may cases where it is necessary to soak laminates in hot water for a long period of time for sterilization purposes, and laminates with weak mutual adhesion between the layers are apt to exfoliate. This spoils the appearance of a packaged foodstuff as well as reducing peel-resistance.

Accordingly, it is necessary in the present invention to provide a layer of strong adhesion between the outermost layer and the centre layer to prevent exfoliation. Polyolefins modified by a carboxylic acid, copolymers of ethylene and vinyl acetate and block copolymers of styrene and butadiene, for example, can be used for the adhesive layers. Particularly preferred is a copolymer of ethylene and vinyl acetate containing 13 to 25% by weight of vinyl acetate units or a mixture of copolymers of ethylene and vinyl acetate containing in total 13 to 25% by weight of vinyl acetate units. The thickness of each adhesive layer is 1 to 3 micrometres.

The thickness of each of the outermost layers should be more than 18% of the total thickness of the laminate. The kinds of copolymer (II) and EVA in the outermost layers, the ratio of the copolymer (II) to EVA in the outermost layers and the thickness of the outermost layers may be the same or different.

Where the thickness of the layer playing the role of sealing is less than 18% of the total thickness of the laminate (at least one of the two outermost layers in the case of clasp-sealing and both of the two outermost layers in the case of envelope-sealing), there is a tendency for the laminates to be poorly peel resistant. The total thickness of the laminate should be from 20 to 100 micrometres. It is necessary for the centre layer to be at least 2 micrometres thick for granting gas-barriering property. The thickness of the centre layer is preferably less than 30% of the total thickness of the laminate because there is a tendency for the impact strength to reduce where the thickness is more than 30% the total thickness of the laminate.

A cylindrical laminate film according to the present invention can be extruded by using a circular die similar to that disclosed in Japanese Patent Application Laying Open No. 82888/78 while supplying molten materials from a number of extruders corresponding to the number of laminate layers. Each layer of flat laminate film according to the present invention can be extruded by using known T-dies while supplying each material from respective extruders followed by lamination.

A representative process for preparing a cylindrical laminate film will be explained below with reference to Figure 2 of the accompanying drawings:

The mixture of copolymer (II) and (III), adhesive resin and PVDC are respectively extruded from the separate extruders (1), (1'), (1'') and are supplied to the co-extruding circular die (2) to form a cylindrical laminate film (3). This film is taken by a pair of nip-rollers (5) installed in a cooling bath (6) containing water maintained at a temperature lower than 40°C to form an envelope-formed folded laminate film. This film is immediately quenched by water in the bath (6) and a liquid (4) is enclosed within the cylindrical part of the laminate film (3) squeezed by the nip-rollers (5), the liquid having been introduced to prevent adhesion of the inner walls of the envelope-formed folded laminate film.

The quenched envelope-formed laminate film is continuously pulled up from the bath (6) and transferred into a heating bath (8) containing hot water maintained at, for instance, 80 to 110°C and/or an oven (not shown) maintained at the same temperature. The film is passed through a second pair of nip-rollers installed in the bath (8) or the oven while being heated.

Thereafter, the folded laminate film is inflated between the second pair of nip-rollers (9) and a third pair of nip-rollers (12) rotating faster, for example 1.5 to 4.0 times faster, than the second pair of nip-rollers (9). The film is inflated by air introduced and enclosed between the two internal walls of the envelope-formed laminate film. This occurs while the film is being cooled by the ambient atmosphere at ordinary temperature. By this inflation, a biaxial stretching of 1.5 to 4.0 times in both the longitudinal direction and in diameter is simultaneously carried out to prepare a heat-shrinkable laminate (11) of the present invention.

In the case of preparing a flat laminate film, the film extruded from a T-die is once cooled by chilling rolls right below the die, and then, after being heated to a predetermined temperature, stretched between a pair of rolls in the direction of material flow and stretched into the direction of width by a tenter in a successive biaxial stretching, or stretched simultaneously into both directions of flow-direction and width-direction by a different tenter.

The heat-shrinkable stretched laminate film according to the present invention obtained by such processes can exhibit excellent oil-resistance, peel-resistance and gas-barriering properties and can desirably be used for packing fatty foodstuffs requiring sterilization at a high temperature.

The following Examples illustrate the present invention:

Examples 1 to 15

By using a plurality of extruders corresponding to each combination of resin shown in Table 2 (refer to Table 1 for each polymer reference), the resins of each combination were extruded from the respective extruders. These extruded resins were co-extruded via a co-extruding die. Cylindrically formed laminates with the desired combination of resins were formed. The laminates were quenched in cooling bath at about 20°C to become cylinders 120 mm in folded width and 250 to 980 micrometres in thickness. A suitable amount of soybean oil had been enclosed in the cylindrical laminates prior to the quenching to prevent adhesion of both the inner surfaces of the laminate when it was folded. Then, the cylindrical laminates were heated for about 12 sec in a hot water bath maintained at a temperature shown in Table 2 while being

4

moved through the bath at a rate of 5 m/min and were passed between first nip-rollers revolving at 5 m/min. Thereafter, the heated cylinders were stretched by 3 times their original length in the longitudinal direction while being stretched in the transverse direction, by inflating the cylinders with air supplied to the cylinders, by 3.3 times their original diameter until passing between second nip-rollers revolving at 15 m/min while being cooled by the ambient atmosphere at ordinary temperature. The thus obtained biaxially stretched laminate film was about 360 mm in folded width and about 25 to 98 micrometres in thickness.

Table 1 shows the physical properties of each polymer used for preparing the laminate films; Table 2 shows the composition and constitution of the laminate films prepared as above; Table 3 describes the methods used to test the physical properties of the laminate films; and Table 4 shows the test results.

TABLE 1
Polymers and copolymers

| Polymer reference | Polymers and copolymers | Melt index (g/10 min) | Density (g/ml) | Content of VAc (wt.%) | Crystalline melt. point (°C) |
|---|---|---|---|---|---|
| A | PVDC | — | — | — | — |
| B | PVDC | — | — | — | — |
| C | L-LDPE | 2.5 | 0.922 | — | 122 |
| D | L-LDPE | 2.5 | 0.93 | — | 122 |
| E | L-LDPE | 0.7 | 0.922 | — | 120 |
| F | L-LDPE | 1.8 | 0.935 | — | 122 |
| G | Low-density polyethylene | 1.2 | 0.922 | — | 107 |
| H | EVA | 0.3 | 0.93 | 3 | 103 |
| I | EVA | 3.8 | 0.93 | 3.5 | 101 |
| J | EVA | 0.5 | 0.93 | 5 | 97 |
| K | EVA | 2.0 | 0.93 | 5 | 97 |
| L | EVA | 1.1 | 0.93 | 5.5 | 96 |
| M | EVA | 3.3 | 0.93 | 6 | 95 |
| N | EVA | 0.2 | 0.93 | 8 | 94 |
| $\overline{O}$ | EVA | 0.5 | 0.93 | 9 | 93 |
| P | EVA | 1.5 | 0.93 | 10 | 91 |
| Q | EVA | 3 | 0.93 | 10 | 90 |
| R | EVA | 0.35 | 0.94 | 12 | 85 |
| S | EVA | 0.8 | 0.94 | 12 | 85 |
| T | EVA | 3 | 0.94 | 15 | 82 |
| U | EVA | 6 | 0.95 | 28 | — |
| V | modified EVA by carboxylic acid | 15 | 0.97 | 19 | — |

Notes:
A is a composition of 100 parts of copolymer of vinylidene chloride and vinyl chloride (weight ratio 80:20) and 1 part of epoxydised soybean oil.
B is a composition of 100 parts of copolymer of vinylidene chloride and vinyl chloride (weight ratio 85:15) and 0.5 parts of epoxydised soybean oil.
C and D: Linear low-density polyethylene, commercial name of ULTZEX® (Mitsui Petrochemical Co.)
E and F: Linear low-density polyethylene, commercial name of NEOZEX® (Mitsui Petrochemical Co.)
V is resin for an adhesive, commercial name of ADMER® (Mitsui Petrochemical Co.)

TABLE 2
Composition and construction of laminate film

| Example | Constitution of each layer | | | | | Percentage by weight of vinyl acetate units in copolymer (III) | Temperature of hot water bath |
| | First | Second | Third | Fourth | Fifth | | |
| | | | (micrometres in thickness) | | | | |
|---|---|---|---|---|---|---|---|
| 1 | C/P=3/7(14)[1] | T(2) | A(10) | T(2) | C/P=2/8(32) | 23 | 90 to 92 |
| 2 | F/P=3/7(14) | K/U=5/5(2) | A(10) | K/U=5/5(2) | C/P=3/7(32) | 30 | 92 to 94 |
| 3 | C/K=3/7(14) | T(2) | A(10) | T(2) | C/P=3/7(32) | 30 | 92 to 94 |
| 4 | C/S=3/7(14) | V(2) | A(10) | V(2) | C/P=3/7(32) | 30 | 90 to 92 |
| 5 | F/P=3/7(14) | T(2) | A(10) | T(2) | F/Ō=6/4(32) | 51 | 95 to 97 |
| 6 | C/M=4/6(12) | T(2) | A(10) | T(2) | C/J=3/7(34) | 33 | 94 to 96 |
| 7 | E/M=4/6(12) | Q/U=7/3(2) | A(10) | Q/U=7/3(2) | E/J=3/7(34) | 33 | 94 to 96 |
| 8 | C/L=4/6(16) | T(2) | A(10) | T(2) | C/J=3/7(30) | 33 | 95 to 97 |
| 9 | C/R=6/4(24) | T(3) | A(28) | T(3) | C/N=4/6(40) | 48 | 95 to 97 |
| 10 | E/S=7/3(10) | T(1) | A(8) | T(1) | C/N=6/4(20) | 63 | 95 to 97 |
| 11 | D/P=4/6(12) | T(2) | A(8) | T(2) | D/J=3/7(34) | 33 | 94 to 96 |
| 12 | C/L=3/7(10) | T(1) | B(3) | T(1) | C/H=3/7(10) | 30 | 96 to 98 |
| 13 | F/H=2/8(10) | Q/U=7/3(1) | B(3) | Q/U=7/3(1) | F/H=2/8(10) | 20 | 96 to 97 |
| 14 | E/I=4/6(10) | V(1) | B(6) | V(1) | E/J=3/7(20) | 33 | 95 to 97 |
| 15 | C/Q=3/7(14) | T(2) | A(10) | T(2) | C/P=3/7(32) | 30 | 92 to 94 |

**TABLE 2 (Continued)**

**Composition and construction of laminate film**

| Example | Constitution of each layer | | | | | Percentage by weight of vinyl acetate units in copolymer (III) | Temperature of hot water bath |
|---|---|---|---|---|---|---|---|
| | First | Second | Third | Fourth | Fifth | | |
| | | (micrometres in thickness) | | | | | |
| Comparative example 1 | C/P=1/9(20) | T(2) | A(10) | T(2) | G/P=3/7(26) | — | 90 to 92 |
| 2 | C/P=8/2(20) | T(2) | A(10) | T(2) | F/P=3/7(26) | — | 94 to 96 |
| 3 | C/P=3/7(14) | — | A(10) | — | C/P=2/8(32) | — | 90 to 92 |
| 4 | G(14) | — | A(10) | — | G(32) | — | — |
| 5 | F/Q=1/9(9) | T(2) | A(10) | T(2) | F/Q=2/8(37) | — | 90 to 92 |
| 6 | F/T=2/8(9) | T(2) | A(10) | T(2) | F/T=2/8(37) | — | 90 to 92 |

Note: [1](C/P=3/7) means that the polymer used for the first layer was a mixture of polymer C and polymer P in Table 1 at a weight ratio of 3 to 7.

# 0 051 480

TABLE 3
Methods of determination

| Item | Method |
|------|--------|
| Rate of Shrinkage in hot water | A specimen 10 cm in length and also 10 cm in width cut out from a laminate film is immersed in hot water at 90°C in a relaxed state for one minute. The rate of linear shrinkage of the film in the length direction and in the width direction were respectively expressed by L and T as percentages of their original dimensions. |
| Oil-resistance | Meat loaf vacuum-packed with a specimen is immersed in hot water at 90°C on which surface an oil is intentionally floated for 8 min, or roast pork (chinese style) vacuum-packed with a specimen is immersed in the same manner for 10 min. After cooling the foodstuff, the damage to the outermost layer is observed. |
| Peel-resistant | A heat-sealed specimen (clasp-type sealing or envelop-type sealing) is stretched on an embroidery frame with about 5% of reserve, and after painting lard on the specimen, it is immersed in hot water at 85°C. The time until the seal part is broken is measured in sec. |

TABLE 4
Test results of laminate film

| Example | Stretch-ability | Rate of heat-shrinkage[2] (%, L/T) | Oil-resistance of the layers | | Peel resistance | Gas-barrier-ing property: ml/cm² · d. atm (10⁴. ml/m².d. bar) |
|---|---|---|---|---|---|---|
| | | | First | Fifth | | |
| 1 | possible | 42/47 | 1 | 2 | 2 | 42 (41.5) |
| 2 | possible | 37/41 | 1 | 1 | 2 | 42 (41.5) |
| 3 | possible | 39/42 | 1 | 1 | 2 | 42 (41.5) |
| 4 | possible | 40/45 | 1 | 1 | 2 | 42 (41.5) |
| 5 | possible | 30/36 | 1 | 1 | 1 | 42 (41.5) |
| 6 | possible | 35/39 | 1 | 1 | 1 | 42 (41.5) |
| 7 | possible | 33/41 | 1 | 1 | 1 | 42 (41.5) |
| 8 | possible | 36/38 | 1 | 1 | 1[1] | 42 (41.5) |
| 9 | possible | 32/37 | 1 | 1 | 1 | 15 (14.8) |
| 10 | possible | 37/42 | 1 | 1 | 1 | 52 (51.3) |
| 11 | possible | 37/40 | 1 | 1 | 1 | 52 (51.3) |
| 12 | possible | 28/35 | 1 | 1 | 1[1] | 68 (67.1) |
| 13 | possible | 32/35 | 1 | 1 | 1[1] | 68 (67.1) |
| 14 | possible | 35/39 | 1 | 1 | 1 | 34 (33.6) |
| 15 | possible | 38/43 | 2 | 1 | 2 | 42 (41.5) |
| Comparative Example 1 | possible | 43/47 | 3 | 3 | 3 | 42 (41.5) |
| 2 | with minute necking | 32/36 | 1 | 1 | 2 | 42 (41.5) |
| 3 | possible | 42/46 | 1 | 2 | 3 | 42 (41.5) |
| 4 | hardly stretchable | — | — | — | — | — |
| 5 | possible | 44/48 | 3 | 2 | 2 | 42 (41.5) |
| 6 | possible | 45/48 | 3 | 3 | 3 | 42 (41.5) |

Note: Oil-resistance is evaluated as: *1* no change found on meatloaf and pork; *2* no change found on meatloaf; *3* breakage found on the outermost layer. Peel resistance is evaluated as: *1* over 60 sec, *2* less than 60 sec and more than 10 sec, and *3* less than 10 sec.
[1] envelope type sealing. The remainder is clasp-type sealing.
In the case of the clasp-type sealing, the fifth layer because the seal surface.
[2] percentage in longitudinal direction/transverse direction.

# 0 051 480

As can be seen from Examples 1 to 15 in Table 4, the laminate films according to the present invention showed excellent stretchability, oil-resistance, peel-resistance and gas-barrier property.

The laminate film of Comparative Example 1 broke in the oil-resistance test, and showed poor peel-resistance because the content of copolymer (II) in the first layer is less than 10% by weight, and because the crystalline melting point of the low-density polyethylene is lower than 110°C.

The laminate film of Comparative Example 2 showed poor stretchability with minute neckings because of the content of EVA in the first layer of less than 30% by weight.

The laminate film of Comparative Example 3 showed poor peel-resistance because of the lack of any adhesive layers.

It was impossible to obtain the laminate film of Comparative Example 4 because both the first and the fifth layers were to be composed of low-density polyethylene without using any adhesive layers.

The laminate film of Comparative Example 5 exhibited poor oil-resistance because of the content of copolymer (II) in the first layer of 10% by weight.

The laminate film of Comparative Example 6 possessed poor oil-resistance because of the crystalline melting point of EVA in the first layer and the fifth layer of as low as 82°C, and also showed poor peel-resistance.

## Claims

1. A heat-shrinkable film comprising a centre layer of a copolyer (II) of vinylidene chloride and two outermost layers of α-olefin polymer with a respective adhesive layer between the centre layer and each outermost layer;

the film being capable of exhibiting a rate of heat shrinkage at 90% of more than 15%;

both the outermost layers consisting of from 20 to 70% by weight of copolymer (II) of ethylene and one or more alpha-olefins, the copolymer (II) having a crystalline melting point of 110 to 125°C, and from 80 to 30% by weight of a copolymer (III) of ethylene and vinyl acetate, the copolymer (III) having a crystalline melting point of 85 to 103°C;

the content of copolymer (II) in the total amount of copolymers in both the outermost layers being less than 65% by weight;

the thickness of the laminate film from 20 to 100 micrometres;

the thickness of each outermost layer more than 18% of the total thickness of the laminate film;

the thickness of the centre layer being at least 2 micrometres; and

the thickness of each adhesive layer being from 1 to 3 micrometres.

2. A laminate film according to Claim 1, wherein said copolymer (I) comprises 65 to 95% by weight of vinylidene chloride and 35 to 5% by weight of at least one unsaturated monomer copolymerizable with vinylidene chloride.

3. A laminate film according to Claim 1 or 2, wherein said copolymer (II) is a copolymer of ethylene and one or more alpha-olefins selected from butene-1, pentene-1, 4-methylpentene-1, hexene-1 and octene-1.

4. A laminate film according to any one of the preceeding claims, wherein said copolymer (III) falls within the pentagon defined in Figure 1 of the accompanying drawings by the lines connecting the points of (W-1), (W-II), (X-II), (Z-III) and (Z-I) in that order.

5. A laminate film according to any of the preceding claims, wherein each adhesive layer is polyethylene modified by a carboxylic acid or a copolymer of ethylene and vinyl acetate, or a mixture thereof.

6. A process for preparing a laminate film as claimed in any one of the preceding claims, which process comprises extruding a layer consisting of vinylidene chloride copolymer (I), and two layers consisting of α-olefin polymer and laminating said layers together with adhesive such that said layer of copolymer (I) is the centre layer of the resulting laminate film and said two layers of α-olefin polymer are the outermost layers; the outermost layers consisting of 20 to 70% by weight of copolymer (II) and 80 to 30% by weight of copolymer (III); and the process being such as to make the total thickness of the laminate film from 20 to 100 micrometres, the thickness of each outermost layer more than 18% of total thickness of the laminate film, the thickness of the centre layer at least 2 micrometres and the thickness of each adhesive layer of the laminate film from 1 to 3 micrometres.

7. A process according to Claim 6, wherein said layer of copolymer (I) and said two layers of copolymers (II) and (III) are coextruded by a circular die to form a cylindrical laminate film.

8. A process according to Claim 6, wherein said layer of copolymer (I) and said two layers of copolymer (II) and (III) are coextruding from a T-die to obtain a flat laminate film.

9. A process for packaging a foodstuff, which process comprises heat-shrink wrapping a foodstuff in a laminate film as claimed in any one of Claims 1 to 5 or made by a process as claimed in Claim 6, 7 or 8.

## Patentansprüche

1. Wärmeschrumpfende Folie, enthaltend eine Mittelschicht aus einem Copolymer (I) von Vinylidenchlorid und zwie äusserste Schichten aus α-Olefin-Polymer mit jeweils einer Klebeschicht zwischen der Mittelschicht und jeder äussersten Schicht wobei die Folie in der Lage ist, bei 90°C ein

Schrumpfverhältnis von mehr als 15% zu zeigen, wobei die äussersten Schichten aus 20 bis 70 Gew.-% eines Copolymers (II) von Ethylen und einem oder mehreren α-Olefin, wobei das Copolymer (II) einen kristallinen Schmelzpunkt von 110 bis 125°C aufweist, und aus 80 bis 30 Gew.-% eines Copolymers (III) von Ethylen und Vinylacetat, wobei das Copolymer (III) einen kristallinen Schmelzpunkt von 85 bis 103°C aufweist, bestehen, wobei der Gehalt des Copolymers (II) in der Gesamtmenge der Copolymeren in beiden äussersten Schichten weniger als 65 Gew.-% beträgt, wobei die Gesamtdicke des Laminatfilms zwischen 20 und 100 μm liegt und die Dicke jeder äussersten Schicht mehr als 18% der Gesamtdicke des Laminatfilmes beträgt, wobei die Dicke der Mittelschicht mindestens 2 μm beträgt, und die Dicke jeder Klebeschicht 1 bis 3 μm beträgt.

2. Laminatfolie nach Anspruch 1, worin das Copolymer (I) 65 bis 95 Gew.-% Vinylidenchlorid und 35 bis 5 Gew.-% von mindestens einem ungesättigten Monomer, welches mit Vinylidenchlorid copolymerisierbar ist, enthält.

3. Laminatfolie nach Anspruch 1 oder Anspruch 2, worin das Copolymer (II) ein Copolymer von Ethylen und einem oder mehreren α-Olefinen ist, die unter Buten-I, Penten-I, 4-Methylpenten-I, Hexen-I und Octen-I ausgewählt sind.

4. Laminatfolie nach einem der voranstehenden Ansprüch, worin das Copolymer (III) in das Fünfeck fällt, welches in Figur I der anliegenden Zeichnung definiert ist durch die Linien, welche die Punkte (W-I), (W-II), (X-II), (Z-III) und (Z-I) in dieser Reihenfolge miteinander verbinden.

5. Laminatfolie nach einem der voranstehenden Ansprüche, worin jede Klebeschicht polyethylenmodifiziert ist durch eine Carbonsäure oder ein Copolymer von Ethylen und Vinylacetat oder ein Gemisch davon.

6. Verfahren zur Herstellung einer Laminatfolie nach einem der voranstehenden Ansprüche, wobei eine Schicht, die aus Vinylidenchlorid-Copolymer (I) besteht, und zwei Schichten, die aus α-Olefin-Polymer bestehen, extrudiert werden, und die Schichten zusammen mit Klebstoff derart laminiert werden, dass die Schicht des Copolymers (I) die Mittelschicht der erhaltenen Laminatfolie ist und die beiden Schichten aus α-Olefin-Polymer die äussersten Schichten sind, wobei die äussersten Schichten aus 20 bis 70 Gew.% Copolymer (II) und 80 bis 30 Gew.-% Copolymer (III) bestehen, und das Verfahren derart durchgeführt wird, dass die Dicke des Laminatfilms 20 bis 100 μm, die Dicke jeder äussersten Schicht mehr als 18% der Gesamtdicke des Laminatfilms beträgt und die Mittelschicht in einer Dicke von mindestens 2 μm und jede Klebeschicht der Laminatfolie in einer Dicke von 1 bis 3 μm hergestellt werden.

7. Verfahren nach Anspruch 6, worin die Schicht aus Copolymer (I) und die beiden Schichten der Copolymeren (II) und (III) coextrudiert werden mittels eines runden Werkzeuges, um eine zylindrische Laminatfolie zu bilden.

8. Verfahren nach Anspruch 6, worin die Schicht von Copolymer (I) und die beiden Schichten der Copolymer (II) und (III) von einem T-förmigen Werkzeug coextrudiert werden, um eine flache Laminatfolie zu erhalten.

9. Verfahren zur Verpackung eines Lebensmittels, wobei ein Lebensmittel in einer Laminatfolie nach einem der Ansprüche 1 bis 5 oder hergestellt nach einem der Ansprüche 6, 7 oder 8 durch Wärmeschrumpfung umhüllt wird.

## Revendications

1. Un film rétractable à la chaleur comprenant une couche centrale d'une copolymère (I) de chlorure de vinylidène et deux couches externes de polymères d'alpha-oléfines comportant respectivement une couche adhésive étant placée entre la couche centrale et chaque couche externe;

le film présentant un taux de rétraction à la chaleur à 90°C supérieur à 15%;

les deux couches externes étant constituées de 20 à 70% en poids d'un copolymère (II) d'éthylène et d'une ou des plusieurs alphaoléfines, le copolymère (II) ayant un point de fusion cristalline de 110 à 125°C, et de 80 à 30% en poids d'un copolymère (III) d'éthylène et d'acétate de vinyle, le copolymère (III) ayant un point de fusion cristalline de 85 à 103°C;

la proportion de copolymère (II) dans la quantité totale de copolymère des deux couches externes étant inférieure à 65% en poids;

l'épaisseur totale du film stratifié étant comprise entre 20 et 100 μm et l'épaisseur de chaque couche externé étant de plus de 18% de l'épaisseur totale du film stratifié:

l'épaisseur de la couche centrale étant d'au moins 2 micromètres;

l'épaisseur de chaque couche adhésive étant de 1 à 3 micromètres.

2. Un film stratifié selon la revendication 1, dans lequel ledit copolymère (I) comprend de 65 à 95% en poids de chlorure de vinylidène et de 35 à 5% en poids d'au moins un monomère insaturé copolymérisable avec le chlorure de vinylidène.

3. Un film stratifié selon l'une des revendications 1 ou 2, dans lequel le copolymère (II) est une copolymère d'éthylène et de une ou de plusieurs alpha-oléfines choisies parmi buténe-1, penténe-1, 4-méthylpenténe-1, hexéne-1 et octène-1.

4. Un film stratifié selon l'une quelconque des revendications précédentes dans lequel le copolymère (III) tombe dans le pentagone défini sur la figure 1 des dessins joints par les lignes reliant les points (W-I), (W-II), (X-II), (Z-III), et (Z-I) dans cet ordre.

## 0 051 480

5. Un film stratifié selon l'une quelconque des revendications précédentes dans lequel chaque couche adhésive est constituée de polyéthylène modifié par un acide carboxylique ou d'un copolymère d'éthylène et d'acétate de vinyle ou d'un mélange de ceux-ci.

6. Procédé de préparation d'un film stratifié tel que revendique dans l'une quelconque des revendications précédentes, ce procédé consistant à extruder une couche constituée d'un copolymère de chlorure de vinyle (I) et deux couches constituées de polymère d'alpha-oléfines et à stratifier ces couches ensemble avec un adhésif, de telle sorte que cette couche de copolymère (I) soit la couche centrale du film stratifié résultant et que les deux couches de polymères d'alpha-oléfines soient les couches externes; les couches externes étant constituées de 20 à 70% en poids de copolymère (II) et de 80 à 30% en poids de copolymère (III); et le procédé étant conçu pour que l'épaisseur du film stratifié soit comprise entre 20 et 100 µm, l'épaisseur de chaque couche externe doit de plus de 18% de l'épaisseur totale du film stratifié, l'épaisseur de la couche centrale soit d'au moins deux micromètres et l'épaisseur de chaque couche adhésive du film stratifié soit de 1 à 3 micromètres.

7. Procédé selon la revendication 6, dans lequel la couche de copolymère (I) et les deux couches de copolymères (II) et (III) sont co-extrudées à travers une filière circulaire pour former un film stratifié cylindrique.

8. Procédé selon la revendication 6, dans lequel la couche de copolymère (I) et les deux couches de copolymères (II) et (III) sont co-extrudées à travers une filière en T pour obtenir un film stratifié plat.

9. Procédé d'emballage d'un produit alimentaire consistant à emballer par rétraction à la chaleur un produit alimentaire dans un film stratifié tel que revendiqué dans l'une quelconque des revendications 1 à 5 ou fabriqué par un procédé tel que revendiqué dans les revendications 6, 7 ou 8.

13

# Fig. 1

Melt Index (g/10min.)

W-II  X-II  4.0
3.0
X-I  2.0
Z-III
1.0
Y-I
Z-II
W-I  Z-I
0

1 2 3 4 5 6 7 8 9 10 11 12 13

Content of VAc in EVA
(% by weight)

# Fig. 2